# EUROPÄISCHE PATENTANMELDUNG

(11) **EP 1 600 585 A2**
(43) Veröffentlichungstag der Anmeldung: **30.11.2005**
(21) Anmeldenummer: 05009084.4
(22) Anmeldetag: 26.04.2005
(51) Int. Cl.: E05B 35/10, E05B 19/06, E05B 27/04

(54) **Schliesszylinder und Schlüssel**

(30) Priorität: 25.05.2004 DE 102004026064
(71) Anmelder: BKS GmbH, D-42549 Velbert (DE)
(72) Erfinder: Hinz, Manfred, 42579 Heiligenhaus (DE)
(74) Vertreter: Füssel, Michael

(57) **Zusammenfassung**

Die vorliegende Erfindung betrifft Schließzylinder (2a-2g) und zugehörige Schlüssel, die zusätzlich zur üblichen vertikalen Hierarchie - etwa in einer Schließanlage - eine zeitabhängige horizontale Hierarchie an Zutrittsberechtigungen besitzen, derart, daß Schlüssel aus älteren Generationen nicht in Schließzylinder (2a-2g) jüngerer Generationen hineinpassen, umgekehrt jedoch.

## Beschreibung

Die vorliegende Erfindung betrifft Schließzylinder und Schlüssel nach dem Oberbegriff des Hauptanspruchs.

Aus der WO 2004/009937A1 sind Schließzylinder und Schlüssel bekannt, bei denen die Schlüssel der nachfolgenden Generation zwar in die Schließzylinder der Vorgeneration hineinpassen, umgekehrt jedoch nicht.

Hierzu wird an dem Schließzylinder ein verlängertes Ende mit einer zusätzlichen Steuerfläche angebracht, die mit einer entsprechend ausgebildeten zusätzlichen Steuerfläche des Schlüssels der nachfolgenden Generation zusammenarbeitet.

Nachteilig ist hier, daß auch längere Schließzylindergehäuse notwendig werden, um zu vermeiden, daß das angesetzte Zylinderende einfach aufgeweitet werden kann.

Ferner läßt sich dieses System relativ einfach dadurch umgehen, daß an den Schlüsseln der Vorgeneration die Tiefenanschläge weggefeilt werden.

Dabei handelt es sich bei der herstellerseitig genau vorbestimmten Profilserie um Längsprofile an Schlüsseln bzw. Schlüsselkanälen, für welche der Hersteller einen Liefervorbehalt für bestimmte Anwendungsfälle hat, um für diese Anwendungsfälle seinen Abnehmern Exklusivität zu sichern. Derartige genau vorbestimmte Profilserien können zum Beispiel reserviert sein für bestimmte Abnehmer (Baustoffhändler, regionale Schlüsseldienste etc.) und sind - branchenüblich - als Rohlinge nicht ohne weiteres über Dritte zu beziehen, sondern werden der DIN 18252 folgend nur gegen Legitimationsausweis vom Hersteller der Profilserie ausgegeben.

Derartige mehrere Schließzylinder und Schlüssel bilden bekannterweise ein System und dienen dazu, vorbestimmte Türen so zu sichern, daß jeweils nur einzelne oder gruppenweise zutrittsberechtigte Schlüssel die entsprechenden Schließzylinder auch schließen können. Dieses System wird als Schließanlage bezeichnet.

Dabei entsteht eine Hierarchie, innerhalb welcher bestimmte Schlüssel lediglich nur einzelne oder in einer Schließanlage einige wenige Schließzylinder, die zu einer vorbestimmten Gruppe gehören, schließen, während übergeordnete Schlüssel - je nach Bedarf - auch zur Betätigung von Schließzylindern anderer Gruppen ausgelegt sind. In einem möglichen Ausführungsbeispiel schließt der Schlüssel der Geschäftsleitung selbstverständlich alle in einem Bürogebäude befindlichen Türen, während die Schlüssel der Mitarbeiter lediglich die frei für die Mitarbeiter zugänglichen Büroräume schließen dürfen.

Bei derartigen Schließanlagen ist es also bekannt, in der vertikalen Hierarchie untere Gruppen von Schließzylindern und zugehörigen Schlüsseln zu bilden, die die Zugangsberechtigung für eine hierarchisch übergeordnete Gruppe von Schliessungen nicht besitzen, während dies in umgekehrter Richtung ohne weiteres der Fall sein kann.

Beispiele für derartige vertikale Hierarchien sind der DIN-Norm DIN 18252 zu entnehmen.

Es handelt sich z.B. um Zentralschließanlagen, Hauptschlüsselanlagen oder Generalhauptschlüsselanlagen.

Die nach dieser DIN-Norm fertigenden namhaften Hersteller von Schließzylindern und Schließanlagen leisten somit einen erheblichen Beitrag zur Sicherheit von Objekten. Die verbraucherseits erwartete Langlebigkeit derartiger Schließzylinder und Schließanlagen erfordert aber erhebliche Lagerkapazitäten, da mit der Weiterentwicklung von möglichen Schlüsselprofilen jeweils neue vorbestimmte Profilserien eines bestimmten Herstellers entstehen, die sich von den eigenen Profilserien und den Profilserien anderer Hersteller zu unterscheiden haben, um die geforderten Sicherheitsaspekte erfüllen zu können.

Berücksichtigt man zudem, daß mit dem Verlust eines vorbestimmten Schlüssels aus einer derartigen Schließanlage die zutrittsberechtigten Schließzylinder auszutauschen sind, ergibt sich die Forderung, daß für jede vorbestimmte Profilserie Sperrippen am Schlüssel und zugehörige Sperrnuten im Schlüsselkanal vorgesehen sein müssen, um einen eventuellen zeitlich späteren Austausch der durch den Verlust eines Schlüssels gefährdeten Schließzylinder zu ermöglichen.

Die herstellerseitig geforderte Bereithaltung entsprechen vieler Profilserien mit ihren jeweils individuell erforderlichen Sperrippen an den Schlüsseln bzw. Sperrnuten im Schlüsselkanal wächst daher auch unter dem Aspekt der Weiterentwicklung neuer Profilfamilien ständig an.

Es ist daher Aufgabe der Erfindung, Maßnahmen anzugeben, mit denen die Anzahl an herstellerseitig vorzuhaltenden Schlüsselprofilen und zugehörigen Schließzylindern ohne Vernachlässigung der Sicherheitsanforderungen, die an Schließzylinder oder an eine Schließanlage gestellt werden, zukunftsorientiert verringert werden kann.

Diese Aufgabe löst die Erfindung mit den Merkmalen des Hauptanspruchs.

Aus der Erfindung ergibt sich der Vorteil, daß unter Beibehaltung der bisherigen Forderungen nach vertikaler Hierarchie die Weiterentwicklung der herstellerseitig genau vorbestimmten Profilserie möglich ist, ohne daß alle Schlüsselprofile einer älteren und gegebenenfalls auslaufenden Profilserie weiterhin bevorratet werden müssen.

Dieser Vorteil wird dadurch erreicht, daß durch die Weiterentwicklung der vorbestimmten Profilserie in Form der aufgezeigten Unterkombination von Querschnitten an Schlüsselkanälen und Querschnittsprofilen zugehöriger Schlüssel eine zeitabhängige horizontale Hierarchie entsteht, die eine Zutrittsberechtigung innerhalb der horizontalen Hierarchie nur in einer Richtung zuläßt.

Hierunter ist zu verstehen, daß die beanspruchte Unterkombination von Querschnitten an Schlüsselkanälen und Querschnittsprofilen zugehöriger Schlüssel einen Schlüssel aus dieser Unterkombination zwar in einem Schlüsselkanal der zeitlich älteren vorbestimmten Profilserie aufnimmt, jedoch nicht in umgekehrter Richtung.

Ein Schlüssel mit dem Querschnittsprofil der vorbestimmten Profilserie aus der älteren Generation paßt nämlich nicht in den Schlüsselkanal eines Schließzylinders, welcher nach den Merkmalen der Unterkombination gefertigt ist, da dieser einen Materialzuwachs im Schlüsselkanal aufweist, für welchen der Schlüssel aus der älteren Generation keinen entsprechenden Materialabtrag an der korrespondierenden Stelle besitzt.

Somit entsteht zum Beispiel innerhalb der bei Schließanlagen ohnehin gegebenen vertikalen Hierarchie ein zusätzlicher Freiheitsgrad in Form der horizontalen Hierarchie, der zeitabhängig die Weiterentwicklung jeglicher vorbestimmter Profilserie in Form von zeitlich nach vorne gerichteter Zutrittsversagung ermöglicht.

Berücksichtigt man, daß zwischen dem Schlüssel und dem Schlüsselkanal an einer vorbestimmten Stelle stets eine in Schlüssellängsrichtung verlaufende Paarung aus Führungsflächen gebildet wird, so sollte der Materialabtrag am Schlüssel außerhalb dieser Führungsflächenpaarung vorgesehen sein.

Unter einer Führungsflächenpaarung ist diejenige Paarung von sich unmittelbar gegenüberliegenden Flächen an Schlüssel und Schlüsselkanal zu verstehen, welche zueinander die geringste Fertigungstoleranz aufweisen.

Diese Führungsflächenpaarung stellt die engste Passung zwischen dem Schlüssel und dem Schlüsselkanal dar. Alle anderen Passungen sind zur Vermeidung von maßlichen Überbestimmungen größer toleriert.

Wird ferner vorgesehen, den Materialabtrag außerhalb der zur vorbestimmten Profilserie gehörenden Bereiche von Sperrippen vorzusehen, bietet dies den Vorteil, daß die Positionen der Sperrippen beim Wechsel von der vorbestimmten Profilserie auf die neue Unterkombination erhalten bleiben, so daß insbesondere modular aufgebaute Herstellwerkzeuge ohne weiteres weiterverwendbar sind.

Dies ist aber keine Einschränkung der Erfindung, da der Materialabtrag prinzipiell an jeder Stelle möglich ist.

Üblicherweise bildet der Schlüsselrücken die stabilste Stelle an derartigen Schlüsseln.

Wird daher der Materialabtrag am Schlüssel im Bereich des nächstgelegenen Drittels der Schlüsselhöhe, gemessen vom Schlüsselrücken aus, vorgesehen, erhält man einen trotz des Materialabtrags immer noch ausreichend stabilen Schlüssel. Zumindest erfolgt keine zusätzliche Schwächung des Querschnittsprofils im Bereich der tiefer gelegenen Einschnitte, die sich üblicherweise an der dem Schlüsselrücken gegenüberliegenden Schlüsselbrust befinden.

Da zudem der Schlüsselrücken eine Gleitfläche bildet, auf der die Gehäusestifte während der Drehung des Schließkerns gleiten,sollte der Materialabtrag außerhalb des Schlüsselrückens aber zwischen dem Schlüsselrücken und der Führungsflächenpaarung vorgesehen sein.

Auf diese Weise ergibt sich eine zusätzliche Längsnut örtlich zwischen dem Schlüsselrücken und der Führungsflächenpaarung. Ein derartiger Schlüssel ist, da er in seinem stabilsten Bereich nur gering geschwächt ist, auch unter Verwendung herkömmlicher Querschnittsprofile immer noch ausreichend stabil.

Zweckmäßigerweise sollte die Führungsflächenpaarung benachbart zum Schlüsselrücken liegen. Wird der Schlüsselrücken von einem auf der Längsmittelebene des Schlüssels senkrecht stehenden Quersteg gebildet, so bietet es sich an, den Materialabtrag an einer Hochkante dieses Quersteges vorzusehen.

Es genügt prinzipiell, lediglich eine der beiden Hochkanten hierfür heranzuziehen.

Die andere Hochkante kann dann im Zuge der Weiterentwicklung der Profilserie durch weitere Unterkombinationen ebenfalls im Sinne der Erfindung benutzt werden.

Wird diese Hochkante von einer bezüglich der Längsmittelebene des Schlüssels divergent in Richtung zum Schlüsselrücken weisenden einhüllenden Ebene begrenzt, läßt sich der Übergangsbereich zwischen dem Schlüsselrücken und der einhüllenden Ebene vorteilhafterweise abschrägen und/oder ausrunden.

Diese Maßnahme dient einer Verbesserung des Drehverhaltens, weil die abgeschrägte oder ausgerundete Kante leicht über die ihr zugewandten Enden der Gehäusestifte gleitet.

Will man zusätzlich erreichen, daß die vorbestimmte Profilserie von jedem Fachmann auf einfache Weise erkannt wird, um zu verhindern, daß Unbefugte, d.h. Inhaber von Schlüsseln ohne den zugehörigen nach DIN 18252 vorgeschriebenen Legitimationsausweis - z.B. der Sicherungskarte -, Nachschlüssel herstellen lassen, wird vorgeschlagen, die Querschnittsprofile der Schlüssel aus übereinander stehenden Buchstaben und/oder Ziffern aufzubauen, die bei Betrachtung auf die Schlüsselspitze auch als solche erkennbar sind.

Insoweit wird auf den Stand der Technik verwiesen, der z.B. aus DE 39 07 065 C2 bekannt ist.

Vorteilhafterweise bietet eine derartige vorbestimmte Profilserie zusätzliche Sicherheit für den redlichen Verbraucher, da durch die einfache Erkennbarkeit des Schlüsselprofils eine Warnfunktion entsteht, durch welche die Gefahr der Herstellung unerlaubter Kopien vermindert wird.

Insoweit kommt auch den Verfahrensansprüchen erhöhte Bedeutung zu, weil damit auch die Herstellung von Schlüsselkopien aus Rohschlüsseln untersagt werden kann, welche nicht herstellerseitig in den Handel gebracht werden, sondern durch eigens für die Herstellung unerlaubter Kopien von Schlüsseln zu Schließzylindern und Schließanlagen vorgesehenen Profil-Längsfräsautomaten.

Dabei wird ein Werkstückrohling zunächst zur Erstellung eines Rohschlüssels mit den erforderlichen Längsrillen versehen. Anschließend werden an dem Rohschlüssel die Einschnitte angebracht.

Dabei kommt den Merkmalen des Anspruchs 11 auch deshalb besondere Bedeutung zu, da in zunehmendem Maße für die Herstellung derartiger unerlaubter Rohschlüssel der Einsatz von Digitaltechnik zu erwarten ist, die allerdings aufgrund der Forderung zur Freigängigkeit eines unerlaubten Nachschlüssels an derartigen möglichen Schließzylindern oder Schließanlagen ein stufenförmig verschlanktes Profil am unerlaubten Nachschlüssel voraussetzt.

Im folgenden wird die Erfindung anhand von Ausführungsbeispielen näher erläutert. Es zeigen:
Fig.1Großdarstellung eines Schlüsselkanals einer Unterkombination mit zugehörigem Schlüsselkanal der ursprünglichen Profilserie;
Fig.2Großdarstellung des Profilquerschnitts eines Schlüssel alter Profilserie und einer Unterkombination nach dieser Erfindung;
Fig.3alternative Ausführungsform gem. Fig.2;
Fig.4a,b Gegenüberstellung von Schlüsseln einer ursprünglichen Profilserie und der neuen, zugehörigen Unterkombination;
Fig.5Schlüssel der Unterkombination im Schließzylinder der ursprünglichen Profilserie;
Fig.6Schnittdarstellung durch einen Schließzylinder der ursprünglichen Profilserie mit Schlüssel der Unterkombination;
Fig.7Schnittdarstellung entsprechend Fig.6, mit gedrehtem Schließkern;
Fig.8Detaildarstellung im Falle des Kontakts zwischen Schlüsselrücken und Gehäusestift;
Fig.9a-d Querschnittsprofile der ursprünglichen Profilserien;
Fig.9e-h die Querschnittsprofile entsprechend Fig.9a-d aus der Unterkombination, und
Fig.10 eine Schließanlage.

Sofern im folgenden nichts anderes gesagt ist, gilt die folgende Beschreibung stets für alle Figuren.

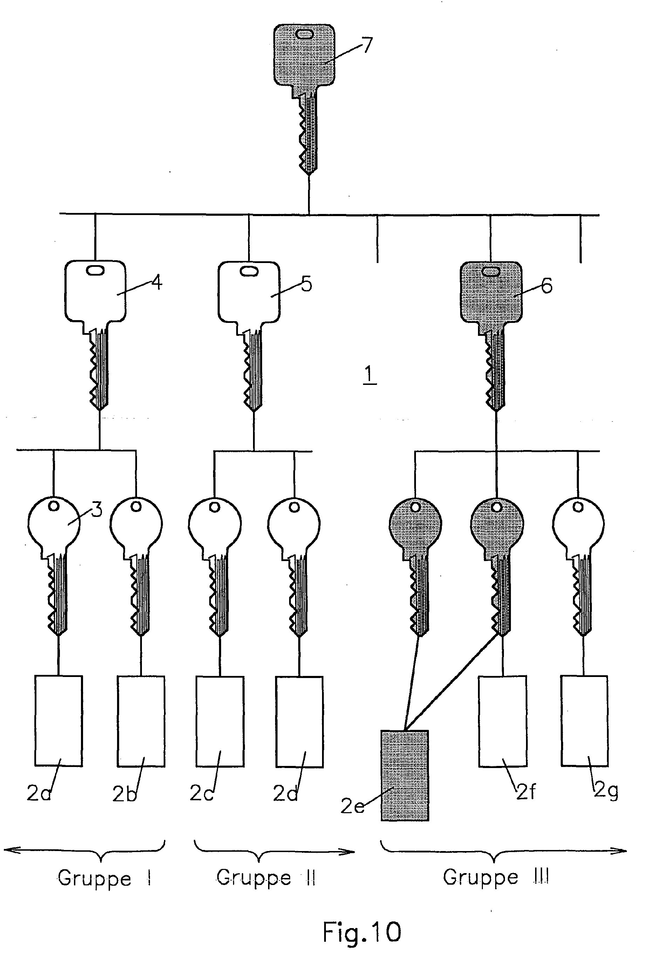

Fig.10 zeigt den grundsätzlichen Aufbau einer möglichen Schließanlage 1.

Zu dieser Schließanlage 1 gehören - hier - acht gezeigte Schließzylinder 2a bis 2g, die einander in vorbestimmter Weise zugeordnet sind. Dabei weisen die Schließzylinder vorbestimmte Schließungen auf, die von einzeln oder gruppenweise zutrittsberechtigten Schlüsseln 3 bis 6 betätigt werden können.

Im gezeigten Ausführungsbeispiel ist jedem Schließzylinder 2a bis 2g ein Einzelschlüssel 3 zugeordnet, welcher jeweils nur den vor ihm liegenden Schließzylinder zulässigerweise schließt.

Dabei ist angedeutet, daß insgesamt drei Gruppen von Schließzylindern gebildet werden und daß zu jeder Gruppe I bis III ein den Einzelschlüsseln 3 übergeordneter Gruppenschlüssel 4,5,6 besteht, der über die Zutrittsbefugnis der Einzelschlüssel 3 hinaus jeweils die zu einer Gruppe I bis III gehörigen Schließzylinder 2a,2b;2c,2d;2e,2f und 2g zu schließen befugt ist.

Darüber hinaus ist ein übergeordneter Schlüssel 7 vorgesehen, der alle Schließzylinder der Gruppen I bis III oder sogar der gesamten Schließanlage zu schließen vermag.

Aus der gezeigten Hierarchie - die auch nur einen Auszug aus einer Schließanlage zeigen könnte - wird deutlich, daß es sich um die vertikale Hierarchie einer üblichen Schließanlage mit Generalhaupt- und Gruppenschlüsseln handelt.

Wesentlich ist, daß die einander zugeordneten Schließzylinder nach vorbestimmter Hierarchie einzeln oder gruppenweise von zutrittsberechtigten Schlüsseln betätigt werden können und daß die Querschnitte der Schlüsselkanäle, die sich in den Schließkernen der Schließzylinder befinden, zusammen mit den Querschnittsprofilen der Schlüssel jeweils einer herstellerseitig genau vorbestimmten Profilserie des Herstellers entstammen.

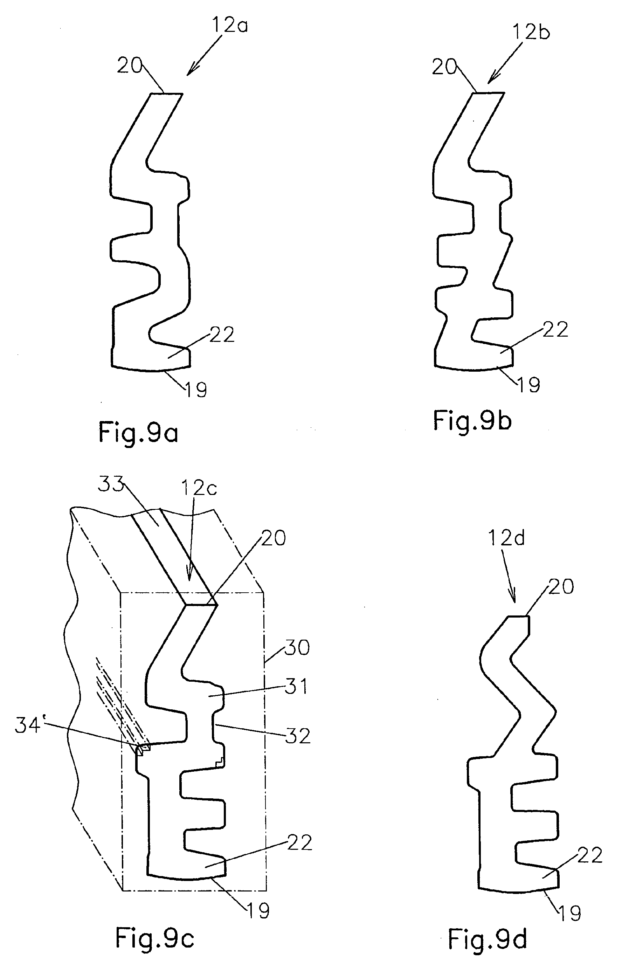

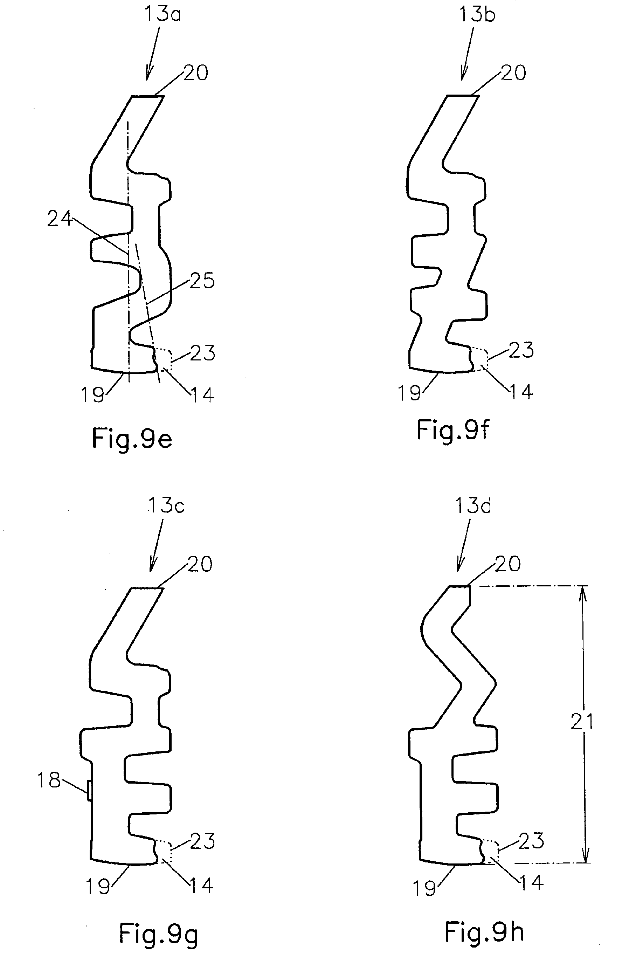

Dies wird anhand der Fig.9a bis 9h verdeutlicht.

Unter einer vorbestimmten Profilserie ist im vorliegenden Fall ein praktisch für jede Profilserie übereinstimmender Querschnitt für alle zur Schließanlage gehörenden Schlüssel 3 bis 7 zu verstehen, wobei selbstverständlich einzelne Sperrippen 18 (siehe Fig.9g) nicht zu diesem jeweiligen Grundprofil gehörig sind.

Die Sperrippen 18 haben hingegen die Funktion, innerhalb einzelner Gruppen einer Profilserie zusätzlich zu verhindern, daß nicht zutrittsberechtigte Schlüssel überhaupt in einen der möglichen anderen Gruppenzylinder eingesteckt werden können.

Insoweit entsprechen nach dem Stand der Technik die Querschnitte der Schlüsselkanäle 8, die sich in den Schließkernen 9 der Schließzylinder 2a bis g befinden, den jeweiligen Querschnittsprofilen der zugehörigen Schlüssel 3 bis 7.

Bei den gezeigten Ausführungsbeispielen handelt es sich durchweg um sogenannte Profilzylinder, dies jedoch ohne Einschränkung der Erfindung hierauf.

Jede vorbestimmte Profilserie 12a bis 12d gibt somit das Grundprofil für Schlüssel und Schlüsselkanal eines Schließzylinders oder einer Schließanlage vor, wobei die entsprechenden Abweichungen vom Grundprofil möglich sind, um Zutrittsberechtigungen auszuschließen oder, in der Hierarchie von oben nach unten betrachtet, zu ermöglichen.

Die jeweils herstellerseitig genau vorbestimmte Profilserie wird nun erfindungsgemäß ergänzt um zumindest eine Unterkombination 13a bis 13d von Querschnitten 8 an Schlüsselkanälen und Querschnittsprofilen 11 zugehöriger Schlüssel, die, wie ein Vergleich der Fig.9a bis 9d mit den Fig.9e bis 9h zeigt, zwar jeweils derselben vorbestimmten Profilserie zugehörig sind, sich aber nach Maßgabe der vorliegenden Erfindung von der vorbestimmten Profilserie, die ursprünglich vorgelegen hat, unterscheiden.

Im Falle der Fig.9a bis 9h ist zu erkennen, daß die Querschnittsprofile der Schlüssel und dementsprechend auch die Querschnitte der Schlüsselkanäle jeweils demselben Grundprofil entsprechen (siehe Fig.9a-9e;9b-9f;9c-9g;9d-9h).

Nach Maßgabe der vorliegenden Erfindung sollen nämlich die Schlüssel der Unterkombinationen 13a bis 13d in die Schlüsselkanäle der vorbestimmten Profilserien 12a bis 12d hineinpassen nicht aber umgekehrt.

Zu diesem Zweck wird an den Schlüsseln jeder vorbestimmten Profilserie 12a bis 12d das Querschnittsprofil, der jeweils zugehörigen Unterkombination 13a bis 13d an zumindest einer Stelle durch Materialabtrag 14 schlanker und an den zugehörigen Schlüsselkanälen durch Materialzuwachs 15 hierzu korrespondierend enger gestaltet als das Profil der jeweils vorbestimmten Profilserie 12a bis 12d.

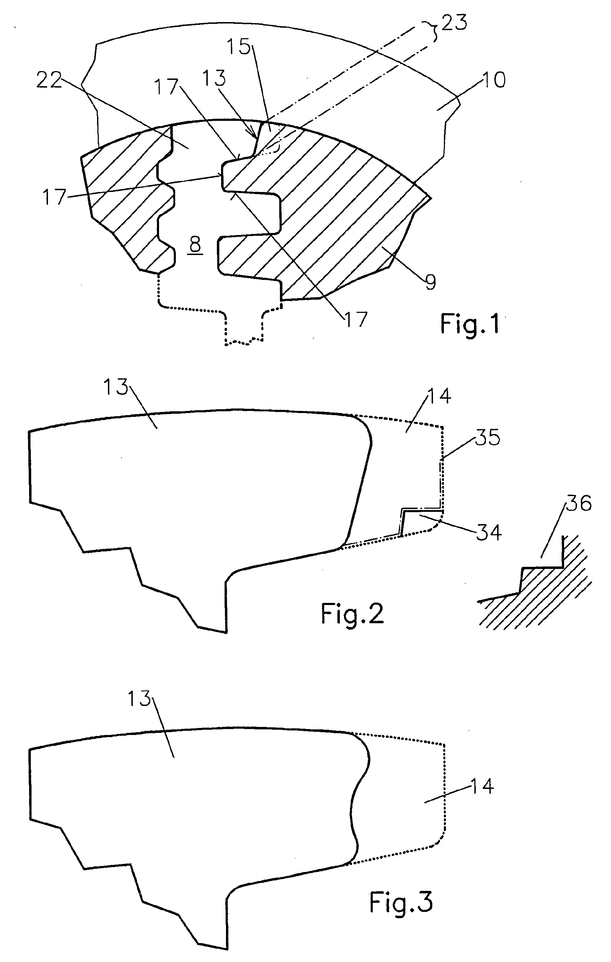

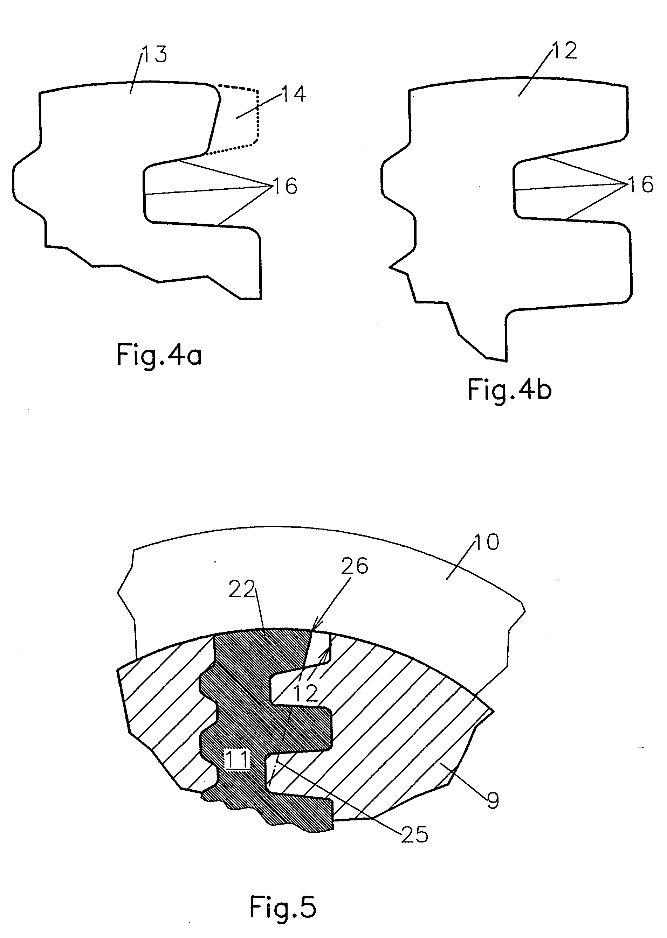

Wie man insbesondere anhand der Fig.1 und 5 erkennen kann, bewirkt der Materialzuwachs 15 am Schlüsselkanal eine Verengung, die verhindert, daß ein mit dem ursprünglichen Querschnittsprofil 11 versehener Schlüssel in diesen Schlüsselkanal eingesteckt werden kann.

Hingegen zeigt aber Fig.5, daß ein Schlüssel mit einem Querschnittsprofil 11, an welchem ein Materialabtrag 14 stattgefunden hat, ohne weiteres in den Schließzylinder mit dem ursprünglichen weiteren Schlüsselkanal hineinpaßt.

Es entsteht auf diese Weise infolge des zeitlich später entstandenen Schlüssels 3 bis 7 mit dem schlankeren Querschnitt und dem zugehörigen Schlüsselkanal engeren Querschnitts eine horizontale Hierarchie, die verhindert, daß ein Schlüssel der ursprünglichen vorbestimmten Profilserie ohne diese Maßnahmen in einen Schließzylinder der korrespondierenden Unterkombination eingesteckt werden kann, während dies in umgekehrter Richtung ohne weiteres möglich ist.

Ergänzend wird vorgeschlagen, daß der Materialabtrag 14 außerhalb einer Führungsflächenpaarung 16-17 vorgesehen ist, die zwischen Schlüssel 3 bis 7 und Schlüsselkanal gebildet wird.

Die Führungsflächen 16 am Schlüssel und 17 am Schlüsselkanal sind diejenigen Fertigungsstellen, welche die engste Passung zueinander aufweisen.

Alle anderen Passungen sind größer toleriert, um Klemmeffekte infolge Doppelpassungen bzw. maßlicher Überbestimmungen zu vermeiden.

Wird der Materialabtrag 14 am Schlüssel bzw. der Materialzuwachs 17 am Schlüsselkanal außerhalb dieser Führungsflächen vorgenommen, bleibt jede bis zur Einführung der neuen Unterkombination vorhandene Präzisionsfertigung dieser Führungsflächenpaarung in vollem Umfange erhalten.

Ferner zeigt Fig.9g, daß praktisch an beliebiger Stelle am Schlüssel eine Sperrippe 18 vorgesehen sein kann, welcher keine Längsnut in einem der Schließzylinder zugeordnet ist, außer in demjenigen Schließzylinder, für welchen dieser Schlüssel eine Zutrittsberechtigung hat.

Es ist insoweit empfehlenswert, die Verschlankung des Schlüsselprofils der Unterkombination außerhalb dieser Sperrippen 18 vorzunehmen.

Dies bedeutet jedoch keinesfalls eine Beschränkung der Erfindung auf diese Maßnahme.

Insbesondere mit der heute üblichen Digitaltechnik können auch unauffällige Verschlankungen im Bereich der Sperrippen gefertigt werden, denen dann - entsprechend unauffällige - Nuten im Schlüsselkanal eines vorbestimmten Schließzylinders entsprechen.

Betrachtet man das Querschnittsprofil eines Schlüssels vom Schlüsselrücken 19 zur Schlüsselbrust 20, wird weiterhin empfohlen, den Materialabtrag 14 im Bereich des dem Schlüsselrücken benachbarten Drittels der Schlüsselhöhe 21 vorzusehen.

Die Schlüsselhöhe 21 ist dabei der Abstand zwischen den äußeren Begrenzungsflächen von Schlüsselrücken 19 und Schlüsselbrust 20.

Um eine relativ große Gleitfläche des Schlüsselrückens 19 am Innenumfang des Schließzylindergehäuses 10 zu erhalten, ist der Schlüsselrücken 19 üblicherweise mit dem Radius des Innenumfangs des Schließzylindergehäuses 10 gekrümmt.

Dabei soll durch einen Quersteg 22, der den Schlüsselrücken 19 bildet, die Gleitfläche möglichst groß sein.

Auf diese Weise entsteht im Bereich des Schlüsselrückens 19 eine äußerst stabile Stelle im Querschnittsprofil des Schlüssels, in deren Nähe zweckmäßigerweise der Materialabtrag 14 vorzunehmen ist.

Will man die herstellerseitig an einem derartigen Schlüssel vorzunehmende Präzision der Führungsflächen und des Schlüsselrückens innerhalb eines funktionellen Bereichs mit den Maßnahmen der vorliegenden Erfindung im Sinne der Unterkombination integrieren, bietet es sich an, den Materialabtrag 14 zwischen dem Schlüsselrücken 19 und der Führungsfläche 16 vorzunehmen.

Auf diese Weise entsteht ein funktioneller Bereich am Schlüssel, in welchem sich die Maßnahmen zur Erzeugung der horizontalen Hierarchie im Bereich der Präzisionsflächen wiederfinden lassen.

Die Anordnung der Führungsflächen 16-17 ist von Hersteller zu Hersteller unterschiedlich.

Zweckmäßigerweise erfolgt diese jedoch in unmittelbarer Nachbarschaft zum Schlüsselrücken 19, so daß es sich anbietet, den Materialabtrag 14 an der Hochkante 23 des den Schlüsselrücken 19 bildenden Querstegs 23 vorzusehen.

Wird zudem diese Hochkante von der Schlüsselbrust 20 zum Schlüsselrücken 19 aus betrachtet von einer Einhüllenden 25 begrenzt, die zur Längsmittelebene 14 divergent geneigt ist, bietet dies den zusätzlichen Vorteil, mit einfachen Mitteln an der Übergangsstelle 26 zwischen der Hochkante 23 und dem Schlüsselrücken 19 eine bedienungsfreundliche Abschrägung oder konvexe Ausrundung anzubringen.

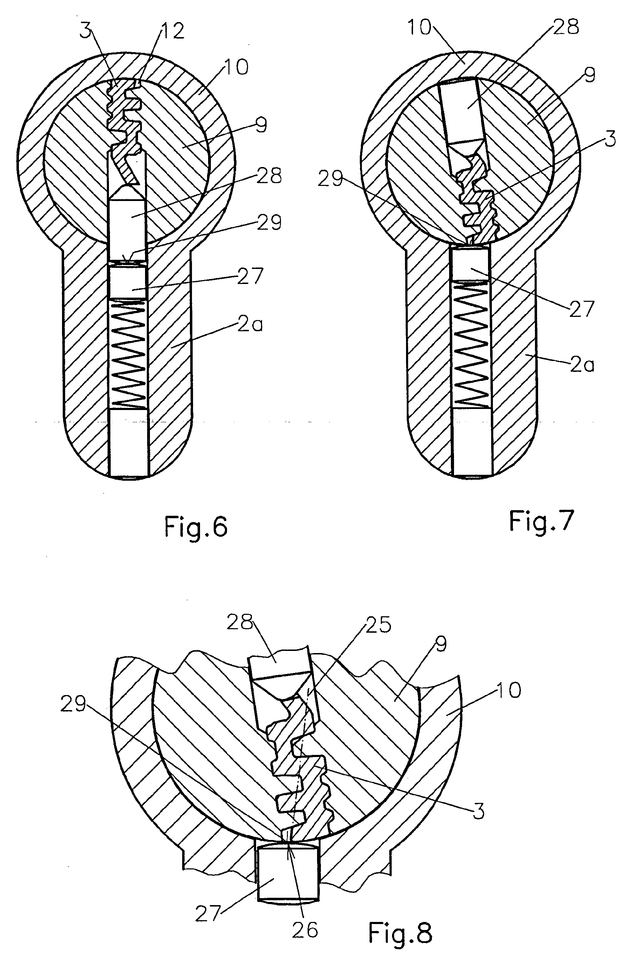

Wie insbesondere Fig.6 bis 8 zeigen, läuft die Übergangsstelle 26 bei Drehung des Schließkerns 9 auf das dem Schließkern 9 zugewandte Kopfende 29 des Gehäusestiftes 27 auf.

Ist die Übergangsstelle 26 entsprechend ausgerundet, kommt es hier zu einem praktisch unmerklichem Abgleiten zwischen dem Schlüsselrücken 19 und diesem Ende 29 des Gehäusestiftes, der in an sich bekannter Weise mit dem im Schließkern 9 befindlichen Kernstift 28 zusammenwirkt.

Darüber hinaus zeigen die Fig.9a bis 9h Ausführungsbeispiele vorbestimmter Profilserien, die aus übereinander stehenden Buchstaben und/oder Ziffern bestehen, und die bei Betrachtung auf die Schlüsselspitze als solche erkennbar sind.

Dabei entsprechen sich jeweils die übereinander stehenden vier unterschiedlichen Profilserien. In der oberen Reihe sind die ursprünglichen Profilserien 12a bis 12d gezeigt, während die untere Reihe die entsprechenden Unterkombinationen 13a bis 13d verdeutlicht. Jede einzelne Profilserie 12a, b,c,d, weist sogenannte Unterprofile auf, die gebildet werden durch Ergänzung oder Entfall von zusätzlichen nicht dargestellten Sperrippen 18, wobei die Sperrippen 18 die Erkennbarkeit des Profilquerschnitts nicht oder nur unauffällig beeinträchtigen.

Die gezeigten Profilserien sind durch die folgenden Ziffern-, Ziffern-Buchstaben-Kombinationen erkennbar: 4 über 2, 4 über Z, 4 über E, S über E.

Darüber hinaus zeigt Fig.9c anhand eines Ausführungsbeispiels ein Verfahren, mit welchem aus einem Modellschlüssel 31, dessen Querschnitt der dick umrandeten Ziffern-Buchstaben-Kombination 4 über E entspricht, ein nachgemachter Schlüssel 30 entsteht, der gemäß der vorliegenden Erfindung ebenfalls zur Betätigung eines entsprechend ausgelegten zugehörigen Schließzylinders mit einem verengten Schlüsselkanal 36 zusammenzuwirken imstande ist.

Der verengte Schlüsselkanal 36 entspricht der Unterkombination und wirkt mit dem nachgemachten Schlüssel 35 entsprechend der Nebenfigur zur Fig.2 zusammen.

Dies ist möglich durch die Fertigung eines nachgemachten Schlüssel 35 aus einem Werkstückrohling 30 entsprechend Fig.9c.

Aus dem Werkstückrohling 30 wird durch Abtasten der Kontur des Modellschlüssels 31 die geometrische Lage und Größe der Längsrillen 32 erfaßt und durch anschließendes Kopieren am Werkstückrohling 30 erzeugt.

Hierzu wird die Außenkontur des Querschnittsprofils des Modellschlüssels 31 von einem quer zur Schlüssellängsrichtung bewegbaren Tastelement mechanisch oder berührungsfrei erfaßt und anschließend wird das abgetastete Querschnittsprofil von einem relativ zur Schlüssellängsrichtung beweglichen spanabhebenden Fräswerkzeug in Form der abgetasteten Längsrillen 32 aus dem Werkstückrohling herausgefräst.

Die Längsrillen 32 finden sich anschließend an dem Rohschlüssel 33 wieder, dessen Querschnittsprofil unter Berücksichtigung der notwendigen technischen Passungen im wesentlichen dem Querschnittsprofil des Modellschlüssels 31 entspricht.

In besonderer Weise ist es aber auch möglich, die Längsrillen 32 stufenweise in Form von Längsrillenstufen 34' aus dem Werkstückrohling 30 oder einem entsprechenden Rohschlüssel 33 herauszufräsen und einen Schlüsselkanal entsprechend dieser Längsrillenstufen 34' zu fertigen.

Wie Fig.2 zeigt, handelt es sich dann allerdings um einen Schlüsselkanal 36 der Unterkombination nach vorliegender Erfindung, der fehlerfrei mit einem entsprechend gefertigten nachgemachten Schlüssel 35 zusammenwirkt. Die Dimensionierung der Längsrillenstufe 34 am Schlüssel 35 und Schlüsselkanal 36 ist nur qualitativ gezeigt.

Darüber hinaus zeigt Fig.10 einen wesentlichen Vorteil der Erfindung für den Fall verlustig gegangener Schlüssel.

Im folgenden wird davon ausgegangen, daß einer der beiden für den grau gezeichneten Schließzylinder zutrittsberechtigten Schlüssel verloren gegangen ist.

Die Sicherheit der Anlage wäre für diesen Fall nicht mehr gewährleistet.

Tauscht man jedoch den Schließzylinder und die zutrittsberechtigten beiden Einzelschlüssel 3 durch eine Unterkombination gemäß der vorliegenden Erfindung aus und ebenso den zugehörigen Gruppenschlüssel 5 zusammen mit dem übergeordneten Schlüssel (z.B. Generalhauptschlüssel) 7, ist die Sicherheit der Anlage wieder hergestellt.

Die vertikale Hierarchie ist in vollem Umfang erhalten geblieben. Infolge der erfindungsgemäßen horizontalen Hierarchie ist lediglich der Austausch der vertikalen Linie notwendig.

Die erfindungsgemäße horizontale Hierarchie sorgt dabei dafür, daß die übergeordneten Schlüssel 5 bzw. 7 auch für die nicht ausgetauschten Schließzylinder zutrittsberechtigt bleiben.

### Bezugszeichenliste:

- 1: Schließanlage
- 2a bis 2g: Schließzylinder
- 3: Einzelschlüssel
- 4: Schlüssel für Gruppe I
- 5: Schlüssel für Gruppe II
- 6: Schlüssel für Gruppe III
- 7: übergeordneter Schlüssel (z.B. Generalhauptschlüssel) für I bis III
- 8: Querschnitt des Schlüsselkanals
- 9: Schließkern
- 10: Schließzylindergehäuse
- 11: Querschnittsprofil des Schlüssels
- 12a bis 12d: vorbestimmte Profilserie
- 13a bis 13d: Unterkombination
- 14: Materialabtrag am Schlüssel
- 15: Materialzuwachs am Schlüsselkanal
- 16: Führungsfläche am Schlüssel
- 17: Führungsfläche am Schlüsselkanal
- 18: Sperrippe
- 19: Schlüsselrücken
- 20: Schlüsselbrust
- 21: Schlüsselhöhe
- 22: Quersteg des Schlüsselrückens
- 23: Hochkante
- 24: Längsmittelebene
- 25: Einhüllende
- 26: Übergangsstelle
- 27: Gehäusestift
- 28: Kernstift
- 29: Ende des Gehäusestifts
- 30: Werkstückrohling
- 31: Modellschlüssel
- 32: Längsrille
- 33: Rohschlüssel
- 34,34': Längsrillenstufe
- 35: nachgemachter Schlüssel
- 36: Schlüsselkanal der weiteren Unterkombination

## Patentansprüche

1. Schließzylinder und Schlüssel, insbesondere für Schließanlagen, wobei zumindest einem Schließzylinder (2a) weitere Schließzylinder (2b-g) in dem Sinne zugeordnet werden können, daß jedem Schließzylinder jeweils nach vorbestimmter Hierarchie einzeln oder gruppenweise zutrittsberechtigte Schlüssel zugehörig sind und die Querschnitte (8) der Schlüsselkanäle, die sich in den Schließkernen (9) der Schließzylinder befinden, zusammen mit den Querschnittsprofilen der Schlüssel jeweils eine herstellerseitig genau vorbestimmte Profilserie (12a-d) des Herstellers bilden, **dadurch gekennzeichnet, daß** die herstellerseitig genau vorbestimmte Profilserie (12a-d) um zumindest jeweils eine Unterkombination (13a-d) von Querschnitten (8) an Schlüsselkanälen und Querschnittsprofilen (11) zugehöriger Schlüssel derselben Profilserie (12a-d) derart ergänzt oder ergänzbar ist, daß
die Schlüssel der Unterkombination (13a-d) in die Schlüsselkanäle der zugehörigen vorbestimmten Profilserie (12a-d) hineinpassen,
die Schlüssel der vorbestimmten Profilserie (12a-d) aber nicht in die jeweilige Unterkombination (13a-d) der Schlüsselkanäle, und daß zu diesem Zweck an den Schlüsseln das Querschnittsprofil der Unterkombination (13a-d) durch Materialabtrag (14) an zumindest einer Stelle schlanker und an den Schlüsselkanälen hierzu korrespondierend die Querschnitte durch Materialzuwachs (15) enger gestaltet sind, als das jeweilige Profil der vorbestimmten Profilserie (12a-d).

2. Schlüssel der Unterkombination (13a-d) nach Anspruch 1, **dadurch gekennzeichnet, daß** der Materialabtrag (14) außerhalb einer Führungsflächenpaarung (16-17), die zwischen Schlüssel (3,4,5,6,7) und Schlüsselkanal gebildet wird, vorgesehen ist.

3. Schlüssel der Unterkombination (13a-d) nach Anspruch 1 oder 2, **dadurch gekennzeichnet, daß** der Materialabtrag (14) außerhalb des zur vorbestimmten Profilserie (12a-d) gehörenden Bereichs von Sperrippen (18) vorgesehen ist.

4. Schlüssel der Unterkombination (13a-d) nach einem der Ansprüche 1 bis 3, **dadurch gekennzeichnet, daß** der Materialabtrag (14) im Bereich des dem Schlüsselrücken benachbarten Drittels der Schlüsselhöhe (21) vorgesehen ist.

5. Schlüssel der Unterkombination (13a-d) nach einem der Ansprüche 2 bis 4, **dadurch gekennzeichnet, daß** der Materialabtrag (14) zwischen dem Schlüsselrücken (19) und der Führungsflächenpaarung (16-17) vorgesehen ist.

6. Schlüssel der Unterkombination (13a-d) nach Anspruch 5, **dadurch gekennzeichnet, daß** die Führungsflächenpaarung (16-17) benachbart zum Schlüsselrücken (19) liegt und daß der Materialabtrag (14) an der Hochkante (23) eines den Schlüsselrücken (19) bildenden Quersteges (22) vorgesehen ist.

7. Schlüssel der Unterkombination (13a-d) nach Anspruch 6, **dadurch gekennzeichnet, daß** die Hochkante (23) von der Schlüsselbrust (20) zum Schlüsselrücken (19) aus betrachtet von einer bezüglich der Längsmittelebene (24) des Schlüssels divergent geneigten Einhüllenden (25) begrenzt wird.

8. Schlüssel der Unterkombination (13a-d) nach Anspruch 6 oder 7, **dadurch gekennzeichnet, daß** die Stelle des Übergangs (26) zwischen der Hochkante (23) und dem Schlüsselrücken (19) abgeschrägt oder konvex abgerundet ist.

9. Schlüssel und Schließzylinder nach einem der Ansprüche 1 bis 8, **dadurch gekennzeichnet, daß** die vorbestimmten Profilserien (12a-d) aus übereinander stehenden Buchstaben und/oder Ziffern gebildet werden, die bei Betrachtung auf die Schlüsselspitze als solche erkennbar sind.

10. Verfahren zur Herstellung eines nachgemachten Schlüssels (35) zur Betätigung eines zugehörigen Schließzylinders (2a-g) nach einem der Ansprüche 1 bis 9, wobei der nachgemachte Schlüssel (35) aus einem Rohschlüssel (33) erzeugt wird, an welchem die Längsrillen (32) zunächst einmal nach der Kontur eines Modellschlüssels (31) durch Abtasten und anschließendem Kopieren erzeugt werden, **dadurch gekennzeichnet, daß** die Außenkontur des Querschnittsprofils des Modellschlüssels (31) von einem quer zur Schlüssellängsrichtung bewegbaren Tastelement erfaßt wird und daß
das abgetastete Querschnittsprofil (11) von einem relativ zur Schlüssellängsrichtung beweglichen spanabhebenden Fräswerkzeug in Form der Längsrillen (32) aus einem Werkstückrohling (30) herausgefräst wird.

11. Verfahren nach Anspruch 10, **dadurch gekennzeichnet, daß** die Längsrillen (34) stufenweise derart herausgefräst werden, daß sie zumindest im Bereich der Rundungen ein Querschnittsprofil am Rohschlüssel (33) ergeben, welches im Vergleich zum Querschnittsprofil (11) des Modellschlüssels (31) stufenförmig schlanker ist.
